# EUROPÄISCHE PATENTSCHRIFT

(11) **EP 2 566 729 B1**
(45) Veröffentlichungstag und Bekanntmachung des Hinweises auf die Patenterteilung: **01.10.2014**
(21) Anmeldenummer: 11712522.9
(22) Anmeldetag: 30.03.2011
(51) Int. Cl.: B60S 1/04, F16B 21/06

(54) **WISCHERMOTOR MIT ENTKOPPLUNGSELEMENT**
WIPER MOTOR WITH A DECOUPLING ELEMENT
MOTEUR D'ESSUIE-GLACE AVEC ÉLÉMENT DE DÉSACCOUPLEMENT

(30) Priorität: 05.05.2010 DE 102010028610
(43) Veröffentlichungstag der Anmeldung: 13.03.2013
(73) Patentinhaber: Robert Bosch GmbH, 70442 Stuttgart (DE)
(72) Erfinder: REITH, Michael, 77815 Buehl-Vimbuch (DE); ALBRECHT, Gerard, F-67690 Hatten (FR); STERNS, Orlando, 76228 Karlsruhe (DE)
(86) Internationale Anmeldenummer: PCT/EP2011/054890
(87) Internationale Veröffentlichungsnummer: WO 2011/138091

(56) Entgegenhaltungen:
- DE-A1-102007 029 410
- DE-A1-102007 034 028
- FR-A1- 2 853 606
- FR-A1- 2 887 830
- US-A- 2 856 221

## Beschreibung

Die Erfindung betrifft einen Wischermotor mit Entkopplungselement gemäß Patentanspruch 1.

### Stand der Technik

Aus DE 10 2007 029 410 A1 ist eine Scheibenwischervorrichtung mit einem Wischermotor mit mindestens einem Befestigungsfuß zur Befestigung des Wischermotors an einer Fahrzeugkarosserie bekannt. Der Befestigungsfuß umfasst eine Befestigungsklammer, die mindestens zwei elastische Federarme aufweist, welche über mindestens einen Verbindungssteg miteinander verbunden sind, wobei die Federarme an ihren freien Enden jeweils mit mindestens einer Querstrebe versehen sind und zur Befestigung des Wischermotors an der Fahrzeugkarosserie derart elastisch verformbar sind, dass die Querstreben in einer ersten Stellung der Federarme durch eine in der Fahrzeugkarosserie ausgebildete Montageöffnung steckbar sind und in einer zweiten Stellung der Federarme die Fahrzeugkarosserie hintergreifen. Die Befestigungsklammer ist in einem Gehäuse des Befestigungsfußes eingesetzt. Um eine Schwingungsübertragung zwischen Karosserie und dem daran befestigten Wischermotor über dem Befestigungsfuß zu verhindern, ist zwischen der Befestigungsklammer und dem Gehäuse des Befestigungsfußes ein Entkopplungselement angeordnet. Das Entkopplungselement steht im Öffnungsbereich des Gehäuses des Befestigungsfußes derart aus dem Gehäuse vor, dass zum einen eine direkte Berührung zwischen Befestigungsfuß und Fahrzeugkarosserie unterbunden wird. Zum anderen ist es möglich, die Federarme über den vorstehenden Teil des Entkopplungselementes derart elastisch zu verformen, dass durch Aufbringen einer Kraft sie aus der zweiten Stellung in die erste Stellung überführbar sind, aus der es dann möglich ist, den Befestigungsfuß von der Fahrzeugkarosserie zu demontieren.

Die Aufgabe der Erfindung besteht darin, eine verbesserte Vorrichtung zum Befestigen des Wischermotors mit einer Halterung bereitzustellen.

Aus FR 2 887 830 A1 ist ein gattungsbildender Wischermotor mit Befestigungsarmen bekannt, die über Entkopplungselemente in Ausnehmungen einer Karosserie befestigt werden können. Zudem ist ein Sicherungselement vorgesehen das in eine zweite Ausnehmung eingreift und ein Lösen des Entkopplungselements verhindert.

Aus FR 2 853 606 A1 ist ein Wischermotor mit Befestigungsarmen und Entkopplungselementen bekannt. Auch in dieser Ausführungsform werden Befestigungsarme über Entkopplungselemente an einer Ausnehmung der Karosserie befestigt. In einer weiteren Ausführungsform werden die Befestigungsarme des Wischermotors über Klammern in Befestigungspositionen an der Karosserie gehalten.

Die Aufgabe der Erfindung wird durch den Wischermotor gemäß Patentanspruch 1 gelöst.

Weitere vorteilhafte Ausführungsformen der Erfindung sind in den abhängigen Ansprüchen angegeben.

Ein Vorteil des erfindungsgemäßen Wischermotors besteht darin, dass der Befestigungsfuß des Wischermotors direkt über das Entkopplungselement mit einer Halterung, insbesondere mit der Karosserie eines Fahrzeuges verbindbar ist. Das Entkopplungselement ist als Befestigungselement ausgebildet. Somit ist es nicht erforderlich, zusätzlich Mittel wie z.B. eine Befestigungsklammer zu verwenden. Damit ist der Aufbau der Verbindung einfacher, kostengünstiger und zuverlässiger. Dies wird dadurch erreicht, dass das Entkopplungselement eine erste Formausbildung aufweist, die ausgebildet ist, um eine Befestigung des Befestigungsfußes an dem Entkopplungselement zu ermöglichen. Weiterhin weist das Entkopplungselement eine zweite Formausbildung auf, die ausgebildet ist, um eine Befestigung des Befestigungselementes an der Halterung zu ermöglichen. Die zweite Formausbildung des Entkopplungselementes ist ausgebildet, um im Zusammenwirken mit der Halterung eine Befestigung des Entkopplungselementes an der Halterung zu ermöglichen. Somit ist auch die Verbindung zwischen dem Entkopplungselement und der Halterung mithilfe einer formschlüssigen Verbindung möglich.

Somit ist durch eine einfache Formgebung des Entkopplungselementes und des Befestigungsfußes eine formschlüssige Verbindung zwischen dem Befestigungsfuß und dem Entkopplungselement möglich.

Die zweite Formausbildung ist in Form einer Nut ausgebildet und das Entkopplungselement weist ein Rastmittel auf, mit dem das Entkopplungselement an der Halterung in einer Montageposition verrastet. Somit kann durch ein einfaches Aufschieben des Entkopplungselementes auf die Halterung eine formschlüssige Befestigung des Entkopplungselementes an der Halterung erreicht werden. Weiterhin kann durch ein einfaches Abziehen des Entkopplungselementes von der Halterung die formschlüssige Verbindung wieder gelöst werden.

Auf diese Weise ist eine einfache und sichere Montage des Entkopplungselementes an der Halterung möglich.

Der Befestigungsfuß weist erste Überlastmittel auf, die das Befestigungselement gegen die Halterung abstützen, wenn eine auf den Befestigungsfuß bzw. den Wischermotor einwirkende Kraft eine festgelegte Kraft überschreitet. Damit wird zum einen eine vibrationsarme Lagerung des Wischermotors erreicht und zugleich wird bei einer zu großen Krafteinwirkung der Befestigungsfuß gegen die Halterung abgestützt. Somit wird auch bei einer Überlast auf den Wischermotor ein Lösen des Wischermotors verhindert und gleichzeitig eine Beschädigung des Entkopplungselementes vermieden.

Damit wird insgesamt eine einfach aufgebaute Verbindungsstruktur erreicht, die zudem zuverlässig funktioniert.

In einer Ausführungsform ist die erste Formausbildung in Form einer Nut und die dritte Formausbildung in Form eines Hakens oder einer Nase ausgebildet.

In einer weiteren Ausführungsform sind das Entkopplungselement und die zweite Formausbildung in der Weise ausgebildet, dass die Befestigung zwischen der Halterung und dem Entkopplungselement lösbar ist.

In einer weiteren Ausführungsform ist die erste Formausbildung des Entkopplungselementes in der Weise ausgebildet, dass die Befestigung zwischen dem Entkopplungselement und dem Befestigungsfuß lösbar ist. Insbesondere kann durch einen einfachen Schiebevorgang mit einer Verrastung das Entkopplungselement mit dem Befestigungsfuß verbunden werden. Auf diese Weise wird eine einfache und zuverlässige Montage des Entkopplungselementes am Befestigungsfuß ermöglicht.

In entsprechender Weise können durch einfache Schiebebewegungen sowohl das Entkopplungselement vom Befestigungsfuß als auch das Entkopplungselement von der Halterung abgezogen werden. Abhängig von der gewählten Ausführungsform sind dabei Verrastmittel und Sperrmittel zu überwinden bzw. auszulenken, um ein Abziehen des Entkopplungselementes von dem Befestigungsfuß oder von der Halterung zu ermöglichen.

In einer weiteren Ausführungsform ist das Entkopplungselement wenigstens teilweise aus einem elastischen Material hergestellt. Beispielsweise kann die Härte des elastischen Materials eine Shore-Härte aufweisen, die größer als 35 und kleiner als 100 ist. Insbesondere kann das Entkopplungselement aus einem Gummimaterial hergestellt sein. Auf diese Weise wird ein Toleranzausgleich aufgrund der elastischen Eigenschaft des Entkopplungselementes ermöglicht. Weiterhin wird eine ausreichende Entkopplung von Vibrationen zwischen der Halterung und dem Wischermotor gewährleistet.

Es zeigen
Fig. 1 eine schematische Darstellung eines Wischermotors, der an einer Karosserie befestigt ist,
Fig. 2 eine perspektivische Darstellung des Endbereiches eines Befestigungsfußes, der über ein Entkopplungselement mit der Karosserie befestigt ist,
Fig. 3 zeigt eine Ansicht auf die Karosserie,
Fig. 4 zeigt einen Querschnitt durch das Endstück des Befestigungsfußes,
Fig. 5 zeigt einen Querschnitt durch das Entkopplungselement,
Fig. 6 zeigt eine Ansicht von unten auf das Entkopplungselement.

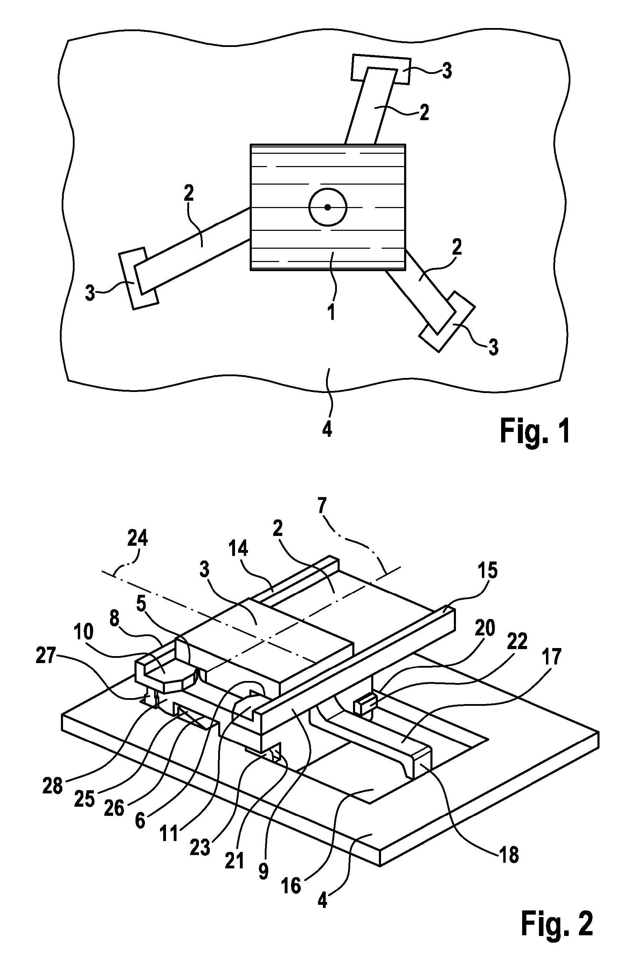

Fig. 1 zeigt in einer schematischen Darstellung eine Scheibenwischvorrichtung mit einem Wischermotor 1, der mithilfe von drei Befestigungsfüßen 2 und Entkopplungselementen 3 mit einer Karosserie 4 eines Fahrzeuges befestigt ist. Die Karosserie 4 stellt eine Halterung für den Wischermotor dar. Die Karosserie 4 ist beispielsweise als Teil einer Hecktür eines Kraftfahrzeuges ausgebildet. Die Rotationsachse des Wischermotors ist senkrecht zur Bildebene und in Form eines Kreises mit einem Mittelpunkt dargestellt.

Fig. 2 zeigt einen Teilausschnitt mit Darstellung eines Endstückes eines Befestigungsfusses 2, der mithilfe eines Entkopplungselementes 3 an der Karosserie 4 befestigt ist. Das Entkopplungselement 3 weist an gegenüberliegenden Seitenflächen eine erste bzw. zweite abgestufte Nut 5, 6 auf, die parallel zueinander angeordnet sind. Die erste und die zweite Nut 5, 6 sind spiegelsymmetrisch zu einer ersten Mittenachse 7 angeordnet. Der Befestigungsfuß 2 weist im Endbereich zwei Endstücke 8, 9 auf, die seitlich in die erste bzw. die zweite Nut 5, 6 ragen. Das erste und das zweite Endstück 8, 9 weisen jeweils einen verbreiterten Endabschnitt 10, 11 auf, die in eine entsprechende seitliche Hinterschneidung der ersten und der zweiten Nut 5, 6 eingreifen. Die zwei Endstücke 8, 9 sind ebenfalls spiegelsymmetrisch zur ersten Mittenachse 7 ausgebildet. Damit ist es möglich, durch eine einfache Schiebebewegung entlang der ersten Mittenachse 7 den Befestigungsfuß 2 am Entkopplungselement 3 zu befestigen.

Der Befestigungsfuß 2 weist aufgrund des ersten und des zweiten Endstückes 8, 9 die Form eines Schwalbenschwanzes auf. Der Befestigungsfuß 2 weist an gegenüberliegenden äußeren Seitenkanten jeweils einen ersten bzw. einen zweiten Steg 14, 15 auf. Der erste und der zweite Steg 14, 15 liegen oberhalb der ersten bzw. der zweiten Nut 5, 6 an der Seitenfläche des Entkopplungselementes 3 an.

Die Karosserie 4 weist eine Ausnehmung 16 auf, in die das Entkopplungselement 3 eingeschoben ist. Weiterhin weist der Befestigungsfuß 2 an dem zweiten Steg 15 ein Sperrelement 17 auf, das vom zweiten Steg 15 ausgeht und in die Ausnehmung 16 mit einem abgewinkelten Endstück 18 hineinragt. Das Endstück 18 ist einer Kante 19 der Karosserie 4 zugeordnet, die auf einer Seite die Ausnehmung 16 begrenzt.

Das Entkopplungselement 3 weist eine dritte und vierte Nut 20, 21 auf, die an einer dritten bzw. vierten Seitenfläche des Entkopplungselementes eingebracht sind. Die dritte und vierte Seitenfläche sind gegenüberliegend an Außenflächen des Entkopplungselements ausgebildet. Die dritte und vierte Nut 20, 21 sind parallel zueinander angeordnet. In die dritte und vierte Nut 20, 21 ist ein erster bzw. ein zweiter Randbereich 22, 23 der Karosserie 4 eingeschoben. Die dritte und die vierte Nut 20, 21 sind im Wesentlichen senkrecht zur ersten und zur zweiten Nut 5, 6 angeordnet und spiegelsymmetrisch zu einer zweiten Mittenachse 24 ausgebildet, die senkrecht zur ersten Mittenachse 7 des Entkopplungselementes 3 angeordnet ist. Die dritte und vierte Nut 20, 21 liegen in einer Ebene unter einer Ebene, auf der die erste und zweite Nut 5, 6 angeordnet sind. Weiterhin ist auf der Karosserie 4 ein erstes Rastelement 25 angeordnet, das in eine Rastausnehmung 26 des Entkopplungselementes 3 eingreift. Zudem ist ein Steg 27 auf der Karosserie 4 angeordnet, der im Wesentlichen parallel zur Längserstreckung des Befestigungsfußes 2 angeordnet ist. Der Steg 27 und das Rastelement 25 sind vorzugsweise parallel zueinander angeordnet. Zwischen dem Steg 27 und dem Rastelement 25 greift eine Rastnase 28 des Entkopplungselementes 3 ein.

Die Ausnehmung 16 ist in der Weise gewählt, dass das Entkopplungselement 3 bei der Montage in die Ausnehmung 16 von oben eingesteckt werden kann und anschließend durch eine seitliche Schiebebewegung in Richtung der zweiten Mittenachse 24 in die Endposition geschoben werden kann, wie in Fig. 2 dargestellt ist. Dabei werden die dritte und die vierte Nut über den ersten und den zweiten Randbereich 22, 23 geschoben und zudem wird die Rastnase 28 über das Rastelement 25 hinweggeschoben, wobei die Rastnase 28 zwischen dem Rastelement 25 und dem Auflagesteg 27 in eine Rastposition federt und das Rastelement 25 hintergreift. Die Karosserie 4, der Steg 27 und das Rastelement 25 sind beispielsweise aus Kunststoff oder Metall hergestellt. Beim Einschieben des Entkopplungselementes 3 in die Karosserie 4 wird das Sperrelement 17 nach oben gebogen, bis sich das Entkopplungselement 3 in der dargestellten Endposition befindet und das Sperrelement 17 mit der Rastnase 18 in die Ausnehmung 16 federn kann.

Das Entkopplungselement 3 ist wenigstens teilweise aus einem elastischen Material, beispielsweise Gummi aufgebaut. Vorzugsweise ist das Entkopplungselement 3 einstückig aus dem elastischen Material hergestellt. Dadurch kann eine Vibrationsentkopplung zwischen dem Wischermotor und der Karosserie erreicht werden. Durch die elastische Ausbildung des Entkopplungselementes ist zudem ein Toleranzausgleich zwischen den vorgegebenen Ausnehmungen 16 der Karosserie 4 und den Befestigungsfüßen 2 möglich. Beispielsweise kann das Entkopplungselement wenigstens teilweise oder vollständig aus einem Material hergestellt sein, das eine Härte aufweist, die im Bereich von beispielsweise 20 bis 100 Shore aufweist. Die Prüfung der Härte wird nach Shore durchgeführt, die beispielsweise in den Normen DIN 53505 oder DIN 7868 beschrieben ist. Das Entkopplungselement dient in der beschriebenen Ausbildung gleichzeitig als Befestigungselement, das eine erste Formausbildung in Form der ersten und der zweiten Nut 4, 5 aufweist, die ausgebildet sind, um eine Befestigung des Befestigungsfußes 2 an dem Entkopplungselement 3 zu ermöglichen. Weiterhin weist das Entkopplungselement eine zweite Formausbildung in Form der dritten und vierten Nut 20, 21 auf, die ausgebildet sind, um eine Befestigung des Befestigungselementes an der Karosserie 4 zu ermöglichen. Für die formschlüssige Verbindung könnten auch andere Formen gewählt werden.

Abhängig von der gewählten Ausführungsform könnte auch der Befestigungsfuß 2 Nuten aufweisen, in die Stege des Entkopplungselementes 3 eingreifen. Da jedoch das Entkopplungselement 3 aus einem elastischen Material bestehen kann, ist es vorteilhafter, in dem Entkopplungselement Nuten vorzusehen und Endabschnitte 10, 11 des Befestigungsfußes 2 in die Nuten des Entkopplungselementes eingreifen zu lassen. Zudem wird durch die vorteilhafte Verrastung des Befestigungsfußes 2 in dem Entkopplungselement 3 eine sichere Befestigung erreicht, die ein Abziehen des Befestigungsfußes 2 vom Entkopplungselement 3 verhindert. Abhängig von der gewählten Ausführungsform könnte auch auf die Verrastung des Befestigungsfußes 2 am Entkopplungselement 3 verzichtet werden.

Weiterhin könnte in einer weiteren Ausführungsform auch die Karosserie 4 Nuten aufweisen, in die Stege oder Randbereiche des Entkopplungselementes 3 eingreifen, um das Entkopplungselement 3 mit der Karosserie zu befestigen.

Die dritte und vierte Nut 20, 21 des Entkopplungselementes 3 stellen Befestigungsmittel dar, die in Form von zweiten Formausbildungen des Entkopplungselementes vorgesehen sind, und die im Zusammenwirken mit den Randbereichen 22, 23 der Karosserie eine sichere und zuverlässige Befestigung des Entkopplungselementes an der Karosserie ermöglichen.
Abhängig von der gewählten Ausführungsform könnte das Entkopplungselement 3 auch nur die erste oder die zweite Nut 5, 6 aufweisen, in die ein erstes oder ein zweites Endstück 8, 9 des Befestigungsfußes 2 eingreift. Das Vorsehen von zwei Nuten 5, 6 und zwei Endstücken 8, 9 erhöht die Haltekraft und verbessert die Führung, ist jedoch nicht unbedingt erforderlich.

In der gleichen Weise könnte das Entkopplungselement 3 auch nur entweder die dritte Nut 20 oder die vierte Nut 21 aufweisen, wobei dann nur der erste Randbereich oder der zweite Randbereich 22, 23 der Karosserie 4 in das Entkopplungselement 3 eingreifen würde. Das Vorsehen von der dritten und der vierten Nut 20, 21 und des ersten und des zweiten Randbereiches 22, 23 erhöht die Haltekraft und verbessert die Führung, ist jedoch nicht unbedingt erforderlich.

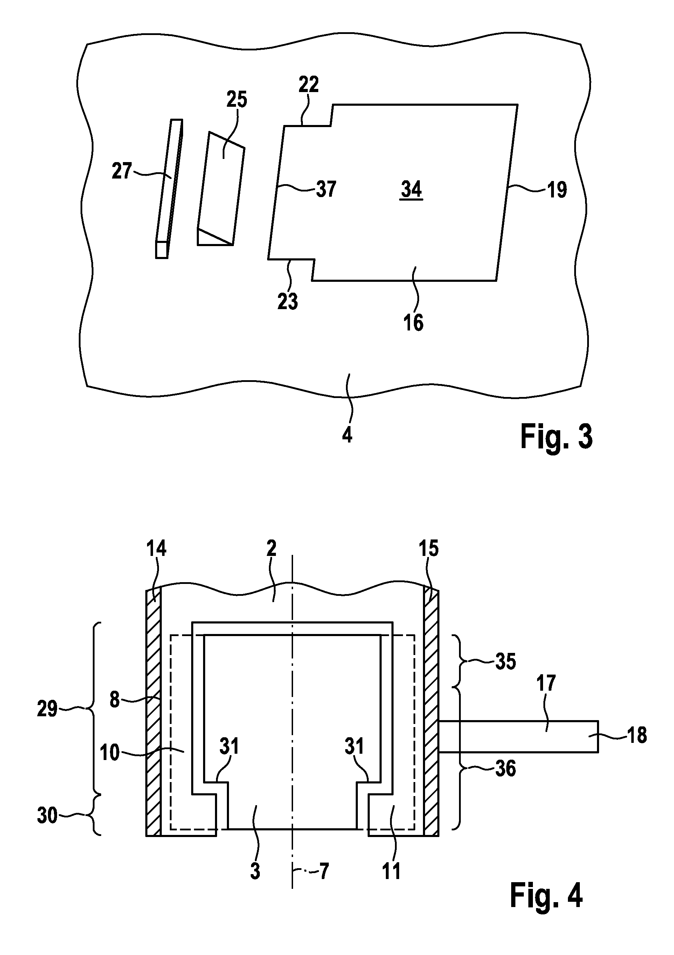

Fig. 3 zeigt eine schematische Darstellung der Karosserie 4 mit Blick auf die Ausnehmung 16. Die Ausnehmung 16 wird auf einer Seite von der Kante 19 und auf der gegenüberliegenden Seite durch eine zweite Kante 37 begrenzt. Die Ausnehmung 16 verjüngt sich in der Breite von der Kante 19 in Richtung auf die zweite Kante 37 durch den ersten und den zweiten Randbereich 22, 23. Der erste und zweite Randbereich 22, 23 ragen von gegenüberliegenden Seiten der Karosserie 4 seitlich in Form einer Abstufung in die Ausnehmung 16. Etwas beabstandet zur zweiten Kante 37 ist das Rastelement 25 im Wesentlichen parallel zur zweiten Kante 37 angeordnet. Das Rastelement 25 ist in Form eines Keiles ausgebildet, dessen Höhe mit Abstand zur Ausnehmung 16 zunimmt. Parallel zum Rastelement 25 ist der Steg 27 angeordnet. Zur Montage wird das Entkopplungselement 3 in einen breiteren Abschnitt 34 der Ausnehmung 16 eingesteckt und anschließend in Richtung auf das Rastelement 25 geschoben. Dabei überstreicht die Rastnase 28 das Rastelement 25 und federt zwischen dem Rastelement 25 und dem Steg 27 ein.

Fig. 4 zeigt einen Querschnitt durch das Entkopplungselement 3 auf der Höhe der ersten und der zweiten Nut 5, 6 oberhalb des Befestigungsfußes 2. Die nicht sichtbare Kontur des Entkopplungselementes 3, das unter den Endstücken angeordnet ist, ist als gestrichelte Linie dargestellt. Das erste und das zweite Endstück 8, 9 des Befestigungsfußes 2 sind spiegelsymmetrisch zu der ersten Mittenachse 7 ausgebildet und erstrecken sich ausgehend von gegenüberliegenden Seitenbereichen aus dem Befestigungsfuß 2. Das erste Endstück und das zweite Endstück 8, 9 gehen über einen ersten schmäleren Abschnitt 29 von dem Befestigungsfuß 2 aus, wobei der erste Abschnitt 29 in einen zweiten Abschnitt 30 mündet, der in Richtung auf die erste Mittenachse 7 breiter ausgebildet ist. Im zweiten Abschnitt 30 weisen die Endstücke 8, 9 Endabschnitte 10, 11 auf, die breiter ausgebildet sind und einen geringeren Abstand voneinander haben. Die erste und die zweite Nut 5, 6 des Entkopplungselementes 3 sind ebenfalls spiegelsymmetrisch zur ersten Mittenachse 7 ausgebildet. Die erste und die zweite Nut 5, 6 weisen einen ersten weiteren Abschnitt 35 auf, in dem die Nuten 5, 6 ausgehend von den Seitenflächen nicht so tief in Richtung auf die erste Mittenachse 7 ausgebildet sind. Die Nuten 5, 6 gehen anschließend in einen zweiten weiteren Abschnitt 36 über, in dem die Nuten 5, 6 ausgehend von den Seitenflächen in Richtung auf die erste Mittenachse 7 tiefer ausgebildet sind.

Bei der Montage wird der Befestigungsfuß 2 mit den Endstücken 8, 9 in Richtung der ersten Mittenachse 7 in die Nuten 5, 6 eingeschoben, wobei die breiteren Endabschnitte 10, 11 der Endstücke 8, 9 über den schmäleren ersten weiteren Bereich 35 der Nuten 5, 6 geschoben werden und anschließend in den breiteren zweiten weiteren Bereich 36 der Nuten 5, 6 gelangen. Beim Aufschieben wird das Entkopplungselement 3 im ersten weiteren Abschnitt der Nuten 5, 6 durch die Endabschnitte 10, 11 der Endstücke 8, 9 zusammengedrückt und/oder die Endabschnitte 10, 11 werden auseinander gezogen. Nach dem Überschreiten des ersten weiteren Abschnittes 35 der Nuten 5, 6 hintergreifen die Endabschnitte 10, 11 der Endstücke 8, 9 Rastkanten 31, die im Übergang von dem ersten zu dem zweiten weiteren Abschnitt 35, 36 der Nuten 5, 6 ausgebildet sind. Abhängig von der gewählten Ausführungsform könnte auf den ersten weiteren Abschnitt 35 der Nuten 5, 6 verzichtet werden und nur Ausnehmungen in Form der Nuten 5, 6 im Bereich des zweiten weiteren Abschnitts 35 vorgesehen sein.

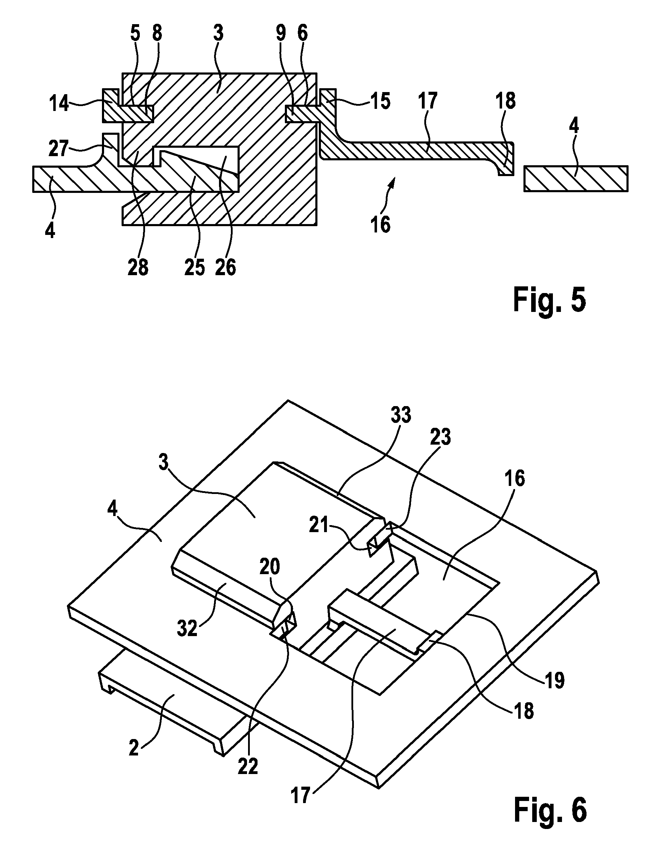

Fig. 5 zeigt einen Querschnitt durch die Karosserie 4, das Entkopplungselement 3 und den Befestigungsfuß 2. In dieser Darstellung ist zu erkennen, dass das Endstück 18 in die Ausnehmung 16 eingreift und als Überlastschutz ein Abziehen des Entkopplungselementes 3 von der Karosserie 4 verhindert.

Weiterhin ist zu sehen, dass die Stege 14, 15 des Befestigungsfußes 2 parallel zu gegenüberliegenden Seitenflächen des Entkopplungselementes 3 angeordnet sind und an diesen anliegen. Das Entkopplungselement 3 ist in Bezug auf eine übliche Betriebslast durch die Rastnase 28 gegen ein Abziehen gesichert. Sollte eine stärkere Kraft auf das Entkopplungselement ausgeübt werden, so dienen nach einer ersten Seite als Überlastschutz das Sperrelement 17, das bei einem Verkippen oder einem Verdrehen des Entkopplungselementes 3 in Anlage an die Kante 19 gebracht wird. Zudem wird bei einem Verkippen oder Verdrehen des Entkopplungselementes 3 in einer gegenüberliegenden Richtung der Befestigungsfuß 2 auf den Auflagesteg 17 aufgelegt, so dass auch hier ein Abziehen oder weiteres Verdrehen des Befestigungsfußes 2 verhindert wird. Durch den Steg 27 und das Sperrelement 17 wird eine Beschädigung des Entkopplungselementes 3 vermieden und bei einer zu starken Krafteinwirkung auf den Motor der Befestigungsfuß 2 in Anlage an die Karosserie 4 gebracht.

In Fig. 5 ist deutlich zu sehen, dass der Abstand zwischen dem Rastelement 25 und der Rastnase 28 kleiner ist als der Abstand zwischen dem Befestigungsfuß 2 und dem Auflagesteg 27 und der Abstand zwischen dem Sperrelement 17 und der Kante 19. Damit ist sichergestellt, dass bei einer üblichen Belastung, d.h. einer üblichen Krafteinwirkung auf den Wischermotor 1 das Entkopplungselement 3 durch die Verrastung der Rastnase 28 hinter dem Rastelement 25 gehalten wird. Sollte die Kraft auf den Wischermotor eine vorgegebene Kraft überschreiten, so wird der Befestigungsfuß 2 entweder in einer Richtung auf dem Auflagesteg 27 oder in der anderen Richtung mit dem Sperrelement 17 auf der Kante 19 abgestützt.

Die Rastausnehmung 26 erstreckt sich über die gesamte Länge des Entkopplungselementes 3 entlang der ersten Mittenachse und nimmt die zweite Kante 37 der Karosserie 4 auf, die der Kante 19 gegenüberliegt.

Fig. 6 zeigt eine Ansicht von unten auf die Karosserie 4. Dabei ist erkennbar, dass an unteren Seitenkanten das Entkopplungselement 3 Einführungsschrägen 32, 33 aufweist. Damit ist ein leichteres Einstecken des Entkopplungselementes 3 durch die Ausnehmung 16 möglich. Die Einführungsschrägen 32, 33 sind an den Seiten ausgebildet, die senkrecht zur Längserstreckung des Befestigungsfußes 2 angeordnet sind.

## Patentansprüche

1. Wischermotor (1) für eine Scheibenwischvorrichtung mit mindestens einem Befestigungsfuß (2) zur Befestigung des Wischermotors (1) an einer Halterung (4), mit einem Entkopplungselement (3), das mit dem Befestigungsfuß (2) in Wirkverbindung steht, wobei das Entkopplungselement (3) als Befestigungselement ausgebildet ist und eine erste Formausbildung (5, 6) aufweist, die ausgebildet sind, um eine Befestigung des Befestigungsfußes (2) an dem Entkopplungselement (3) zu ermöglichen, wobei das Entkopplungselement (3) eine zweite Formausbildung (20, 21) aufweist, die ausgebildet sind, um eine Befestigung des Befestigungselements (3) an der Halterung (4) zu ermöglichen, wobei der Befestigungsfuß (2) eine dritte Formausbildung (8, 9) aufweist, wobei die erste und die dritte Formausbildung (5, 6, 8, 9) eine formschlüssige Befestigung des Befestigungsfußes (2) am Entkopplungselement (3) ermöglichen, wobei die zweite Formausbildung in Form einer Nut (20, 21) ausgebildet ist, wobei das Entkopplungselement (3) ein Rastmittel (28) aufweist, mit dem das Entkopplungselement (3) an der Halterung (4) gegen ein Abziehen von der Halterung gesichert werden kann, **dadurch gekennzeichnet, dass** der Befestigungsfuß (2) erste Überlastmittel (17, 18) aufweist, die den Befestigungsfuß (2) gegen die Halterung (4) abstützen, wenn eine auf den Befestigungsfuß (2) einwirkende Kraft eine festgelegte Kraft überschreitet.

2. Wischermotor nach Anspruch 1, **dadurch gekennzeichnet, dass** die erste Formausbildung in Form wenigstens einer Nut (5, 6) ausgebildet ist, und dass die dritte Formausbildung in Form wenigstens eines Hakens (10, 11) oder einer Nase ausgebildet ist.

3. Wischermotor nach einem der Ansprüche 1 oder 2, **dadurch gekennzeichnet, dass** das Entkopplungselement (3) wenigstens teilweise ein elastisches Material aufweist, wobei die Härte des elastischen Materials vorzugsweise größer als 35 Shore und kleiner als 100 Shore ist.

4. Wischermotor nach einem der Ansprüche 1 bis 3, **dadurch gekennzeichnet, dass** die erste und dritte Formausbildung (5, 6, 8, 9) in der Weise ausgebildet sind, dass durch eine Schiebebewegung und ein Verrasten der Befestigungsfuß (2) am Entkopplungselement (3) befestigt werden kann.

5. Wischermotor nach einem der Ansprüche 1 bis 4, **dadurch gekennzeichnet, dass** die zweite Formausbildung (20, 21, 28) in der Weise ausgebildet sind, dass durch eine Schiebebewegung und ein Verrasten des Entkopplungselementes (3) an der Halterung (4) das Entkopplungselement (3) an der Halterung (4) befestigt werden kann.

6. Wischermotor nach einem der Ansprüche 1 bis 5, **dadurch gekennzeichnet, dass** das Entkopplungselement (3) zwei erste Formausbildungen und der Befestigungsfuß zwei dritte Formausbildungen aufweist, die symmetrisch zu einer Schieberichtung angeordnet sind.

7. Wischermotor nach einem der Ansprüche 1 bis 6, **dadurch gekennzeichnet, dass** das Entkopplungselement zwei zweite Formausbildungen aufweist, die symmetrisch zu einer zweiten Schieberichtung angeordnet sind.

## Claims

1. Wiper motor (1) for a window wiping apparatus having at least one fastening foot (2) for fastening the wiper motor (1) to a holder (4), having a decoupling element (3) which is operatively connected to the fastening foot (2), the decoupling element (3) being configured as a fastening element and having a first formation (5, 6) which is configured to make it possible to fasten the fastening foot (2) to the decoupling element (3), the decoupling element (3) having a second formation (20, 21) which is configured to make it possible to fasten the fastening element (3) to the holder (4), the fastening foot (2) having a third formation (8, 9), the first and the third formation (5, 6, 8, 9) making it possible to fasten the fastening foot (2) to the decoupling element (3) in a positively locking manner, the second formation being configured in the form of a groove (20, 21), the decoupling element (3) having a latching means (28), by way of which the decoupling element (3) can be secured on the holder (4) against being pulled off from the holder, **characterized in that** the fastening foot (2) has first overload means (17, 18) which support the fastening foot (2) against the holder (4) if a force which acts on the fastening foot (2) exceeds a fixed force.

2. Wiper motor according to Claim 1, **characterized in that** the first formation is configured in the form of at least one groove (5, 6), and **in that** the third formation is configured in the form of at least one hook (10, 11) or a lug.

3. Wiper motor according to either of Claims 1 and 2, **characterized in that** the decoupling element (3) at least partially has an elastic material, the hardness of the elastic material preferably being greater than 35 Shore and less than 100 Shore.

4. Wiper motor according to one of Claims 1 to 3, **characterized in that** the first and third formations (5, 6, 8, 9) are configured in such a way that the fastening foot (2) can be fastened to the decoupling element (3) by way of a pushing movement and latching.

5. Wiper motor according to one of Claims 1 to 4, **characterized in that** the second formation (20, 21, 28) is configured in such a way that the decoupling element (3) can be fastened to the holder (4) by way of a pushing movement and latching of the decoupling element (3) on the holder (4).

6. Wiper motor according to one of Claims 1 to 5, **characterized in that** the decoupling element (3) has two first formations and the fastening foot has two third formations which are arranged symmetrically with respect to a pushing direction.

7. Wiper motor according to one of Claims 1 to 6, **characterized in that** the decoupling element has two second formations which are arranged symmetrically with respect to a second pushing direction.

## Revendications

1. Moteur d'essuie-glace (1) pour un dispositif d'essuie-glace comprenant au moins une patte de fixation (2) pour la fixation du moteur d'essuie-glace (1) à un support (4), comprenant un élément de désaccouplement (3) qui est en liaison fonctionnelle avec la patte de fixation (2), l'élément de désaccouplement (3) étant réalisé sous forme d'élément de fixation et comprenant une première partie conformée (5, 6) qui est réalisée afin de permettre une fixation de la patte de fixation (2) à l'élément de désaccouplement (3), l'élément de désaccouplement (3) comprenant une deuxième partie conformée (20, 21) qui est réalisée afin de permettre une fixation de l'élément de fixation (3) au support (4), la patte de fixation (2) comprenant une troisième partie conformée (8, 9), la première et la troisième partie conformée (5, 6, 8, 9) permettant une fixation par engagement par complémentarité de formes de la patte de fixation (2) à l'élément de désaccouplement (3), la deuxième partie conformée étant réalisée sous la forme d'une rainure (20, 21), l'élément de désaccouplement (3) comprenant un moyen d'encliquetage (28) à l'aide duquel l'élément de désaccouplement (3) sur le support (4) peut être protégé contre un retrait du support,
**caractérisé en ce que**
la patte de fixation (2) comprend des premiers moyens de surcharge (17, 18) qui appuient la patte de fixation (2) contre le support (4) lorsqu'une force agissant sur la patte de fixation (2) dépasse une force déterminée.

2. Moteur d'essuie-glace selon la revendication 1, **caractérisé en ce que** la première partie conformée est réalisée sous la forme d'au moins une rainure (5, 6), et **en ce que** la troisième partie conformée est réalisée sous la forme d'au moins un crochet (10, 11) ou un ergot.

3. Moteur d'essuie-glace selon la revendication 1 ou 2, **caractérisé en ce que** l'élément de désaccouplement (3) comprend au moins partiellement un matériau élastique, la dureté du matériau élastique étant de préférence supérieure à 35 Shore et inférieure à 100 Shore.

4. Moteur d'essuie-glace selon l'une quelconque des revendications 1 à 3, **caractérisé en ce que** les première et troisième parties conformées (5, 6, 8, 9) sont réalisées de telle sorte que la patte de fixation (2) puisse être fixée sur l'élément de désaccouplement (3) par un mouvement de coulissement et un encliquetage.

5. Moteur d'essuie-glace selon l'une quelconque des revendications 1 à 4, **caractérisé en ce que** la deuxième partie conformée (20, 21, 28) est réalisée de telle sorte que l'élément de désaccouplement (3) puisse être fixé sur le support (4) par un mouvement de coulissement et un encliquetage de l'élément de désaccouplement (3) sur le support (4).

6. Moteur d'essuie-glace selon l'une quelconque des revendications 1 à 5, **caractérisé en ce que** l'élément de désaccouplement (3) comprend deux premières parties conformées et la patte de fixation comprend deux troisièmes parties conformées, lesquelles sont disposées de manière symétrique par rapport à une direction de coulissement.

7. Moteur d'essuie-glace selon l'une quelconque des revendications 1 à 6, **caractérisé en ce que** l'élément de désaccouplement comprend deux deuxièmes parties conformées, lesquelles sont disposées de manière symétrique par rapport à une deuxième direction de coulissement.
